# EUROPEAN PATENT APPLICATION

(11) **EP 1 566 259 A1**
(43) Date of publication of application: **24.08.2005**
(21) Application number: 05250887.6
(22) Date of filing: 16.02.2005
(51) Int. Cl.: B29C 65/14, D06H 5/00, B60R 21/16

(54) **Fabric seam formation by radiation welding process**

(30) Priority: 18.02.2004 US 546083 P
(71) Applicant: INVISTA Technologies S.à.r.l., Wilmington, DE 19808 (US)
(72) Inventor: Barnes, John A., Brockworth, Gloucester GL3 4HP (GB); Budd, Carol Ann, Sydenham, Ontario K0H 2T0 (CA); Westoby, Scott., Brockworth, Gloucester GL3 4HP (GB)
(74) Representative: Cockerton, Bruce Roger

(57) **Abstract**

A method for forming a radiation, such as laser, welded point of attachment between at least two fabric pieces (10,20), such as ends, is provided. The method comprises the steps of lapping (30) the fabric pieces to be attached; applying to the lapped fabric pieces in a region where the fabric pieces are to be attached a radiation, preferably an infrared energy, absorbing ink; and exposing the ink applied region (40) of lapped fabric pieces to a source of radiation in the wave length absorbed by the radiation absorbing ink. In the case of an infrared absorbing ink, a laser light power has been applied in the range of 200 to 1000 Watts while scanning laser light along the ink applied region at a rate of one to twenty-five meters per minute. The method provides a fabric construction useful as an air bag, a gas inflatable safety cushion or curtain or in other applications, such as articles of apparel.

## Description

### FIELD OF THE INVENTION

The present invention relates to a method for joining fabrics, or seam formation, and fabrics joined by the inventive method. More particularly it relates to seam formation using radiation in the presence of a radiation absorbing ink, generally laser light, to weld two or more fabric pieces, and fabric pieces joined by seams formed using radiation. Most particularly this invention relates to a method of seam formation in high performance fabrics which provides a substantially gas-tight fabric seam of high mechanical strength, and the high performance fabrics joined therefrom.

### BACKGROUND OF THE INVENTION

It is long known to form seams when joining different fabrics, or different pieces of fabrics. Fabrics are joined together for a multitude of purposes. For example, fabrics are joined to form apparel; to form upholstery fabric for furniture; and to form linens and cushions. The most typical method of seam formation is sewing.

Mechanical strength is almost always a desired attribute for a seam. The desired mechanical strength of the seam depends further on the application of the joined fabrics. For example, a joined fabric intended to be used for upholstery may require a seam of different mechanical strength than a seam in a fabric intended to be used as apparel.

In some applications, the seams must also have gas tightness qualities in addition to mechanical strength, particularly where the final product is to be inflated. The gas permeability of the final product is comprised of two parts; first, there is the inherent inflation gas permeability of the woven fabric; and second, where the seam is sewn, the sewn seams contribute to the inflation gas permeability by providing a leakage path at every point where a seam sewing thread penetrates the woven fabric.

For example, the seams of airbags and automotive safety cushions and curtains require exceptionally high performance for inflation gas permeability, in addition to mechanical strength. Typically, such products have sewn seams because they are constructed from more than one piece of woven fabric. Today, more automotive safety cushions and curtains are required to remain inflated for 5 to 15 seconds in order to provide occupant protection during a prolonged roll-over event. Generally, these safety cushions and curtains are constructed from as few individual pieces as possible and consequently fewer seams. With the goal of reducing the leakage of inflation gases to a level dominated only by the inherent gas permeability of the woven fabric, a substantially improved gas-tight and mechanically secure seam is required.

Methods to replace sewn seams include room temperature curing adhesive bonding, hot-melt adhesive, ultrasonic and radio frequency (RF) welding techniques. Adhesive bonding is slower and more costly than sewing. RF welding is a particularly useful method of forming fabric seams. Generally, a dipolar (or dipole) thermoplastic film is placed between the two portions of fabric to be joined and a high frequency, RF source, is applied. The RF field interacts with the dipole thermoplastic causing it to melt and bond the two fabric portions together. Such fabric welded seams are strong and can be gas-tight. Under the high pressure of airbag inflation, however, such RF welded seams are known to be mechanically inadequate. This point is made by Keshavaraj in PCT patent application (assigned to Milliken and Company) publication number WO 2001/23219. Keshavaraj found it necessary, in some embodiments, to augment RF welded seams with a sewn seam to provide adequate mechanical strength for application in airbags, safety cushions and side curtains.

U.S. patent number 5,693,412 to Walters discloses laser welding of elastically deformable fabrics using urethane pellets which are heated to a liquid and then injected onto a laminate, and the laser beam is then applied to molecularly impregnate the urethane into the laminate. The urethane melted by the laser is thus impregnated and molecularly bonded to two layers of the laminate (an elastomer layer and a polymeric film.) Walters suggests any two materials can be laser welded to achieve a seam but also that a polymeric film is required to obtain a gas-tight laser welded seam.

Applicants have found the prior art seam formation methods disadvantageous in several modes of performance. First, the prior art sewn seam is not sufficiently gas-tight. Second, the known RF welding means require a sewn seam step in addition to welding to achieve the required mechanical integrity of the seam for high performance fabric applications. Third, a polymeric film material sandwiched by the two fabrics to be joined is needed where gas-tight performance is required. Thus, a longstanding unmet need for a simple non-sewn fabric seam eliminating at least some deficiencies of the prior art exists.

### SUMMARY OF THE INVENTION

The present invention overcomes at least some problems associated with the prior art by providing a method to form a radiation welded fabric seam which is substantially gas-tight and of high mechanical performance.

Therefore, provided in accordance with the present invention is a joined fabric comprising at least a single radiation welded point of attachment between at least two pieces (such as ends) of fabric pieces that are to be joined.

Further in accordance with the present invention, there is provided a joined fabric comprising at least a single radiation welded point of attachment between at least two pieces (such as ends) of fabrics that are to be joined, wherein the joined fabric pieces may comprise a fabric construction.

Further in accordance with the present invention, there is provided a joined fabric comprising at least a single radiation welded point of attachment between at least two pieces (such as ends) of fabrics that are to be joined, wherein the joined fabric pieces may comprise a fabric construction. The fabric construction may comprise an item of apparel, an upholstery fabric, an airbag, or a gas inflatable safety cushion or curtain. An item of apparel may be, for example, a life saving jacket or vest, a diving buoyancy compensator vest, an inflatable sole, shoe or boot.

Further in accordance with the present invention, there is provided a method for forming a radiation welded point of attachment between at least two fabric pieces (such as ends) comprising the steps of: lapping the fabric pieces to be attached; optionally applying pressure to the lapped fabric pieces; applying to the lapped fabric pieces in a region where the fabric pieces are to be attached a radiation absorbing ink; exposing the ink applied region of lapped fabric pieces to a source of radiation. The radiation absorbing ink may be applied to any convenient surface, such as one or both fabric pieces.

Further in accordance with the present invention, there is provided a method for forming a radiation welded point of attachment between at least two fabric pieces (such as ends) comprising the steps of: lapping the fabric pieces to be attached; interleaving a polymeric film, such as a polyamide film, between the lapped fabric pieces; optionally applying pressure to the lapped fabric pieces and interleaved polymeric film (such as a polyamide film); applying to the lapped fabric pieces in a region where the fabric pieces are to be attached a radiation absorbing ink; and exposing the ink applied region of lapped fabric pieces to a radiation power source emitting radiation in the range of the absorption band of the radiation absorbing ink. The radiation absorbing ink may also be applied to any convenient surface, such as one or both fabric pieces; to the polymeric film or any combination thereof.

Further in accordance with the present invention, there is provided a method for forming a laser welded point of attachment between at least two fabric pieces (such as ends) comprising the steps of: lapping the fabric pieces to be attached; optionally applying pressure to the lapped fabric pieces; applying to the lapped fabric pieces in a region where the fabric pieces are to be attached an infrared energy absorbing ink; and exposing the ink applied region of lapped fabric pieces to a source of infrared radiation, such as a laser.

Further in accordance with the present invention, there is provided a method for forming a laser welded point of attachment between at least two fabric pieces (such as ends) comprising the steps of: lapping the fabric pieces to be attached; optionally applying pressure to the lapped fabric pieces; applying to the lapped fabric pieces in a region where the fabric pieces are to be attached an infrared energy absorbing ink; exposing the ink applied region of lapped fabric pieces to a laser power in the range of 200 to 1000 Watts while scanning the laser light along the ink applied region at a rate of one to twenty-five meters per minute.

Further in accordance with the present invention, there is provided a method for forming a laser welded point of attachment between at least two fabric pieces (such as ends) comprising the steps of: lapping the fabric pieces to be attached; interleaving a polymeric film, such as a polyamide film between at least two of the lapped fabric pieces; optionally applying pressure to the lapped fabric pieces and interleaved polymeric film (such as a polyamide film); applying to the lapped fabric pieces in a region where the fabric pieces are to be attached an infrared energy absorbing ink; exposing the ink applied region of lapped fabric pieces to a laser power in the range of 200 to 1000 Watts and while scanning the laser light along the ink applied region at a rate of one to twenty-five meters per minute. The infrared energy absorbing ink may also be applied to any convenient surface, such as one or both fabric pieces; to the polymeric film or any combination thereof.

### BRIEF DESCRIPTIONS OF THE DRAWINGS

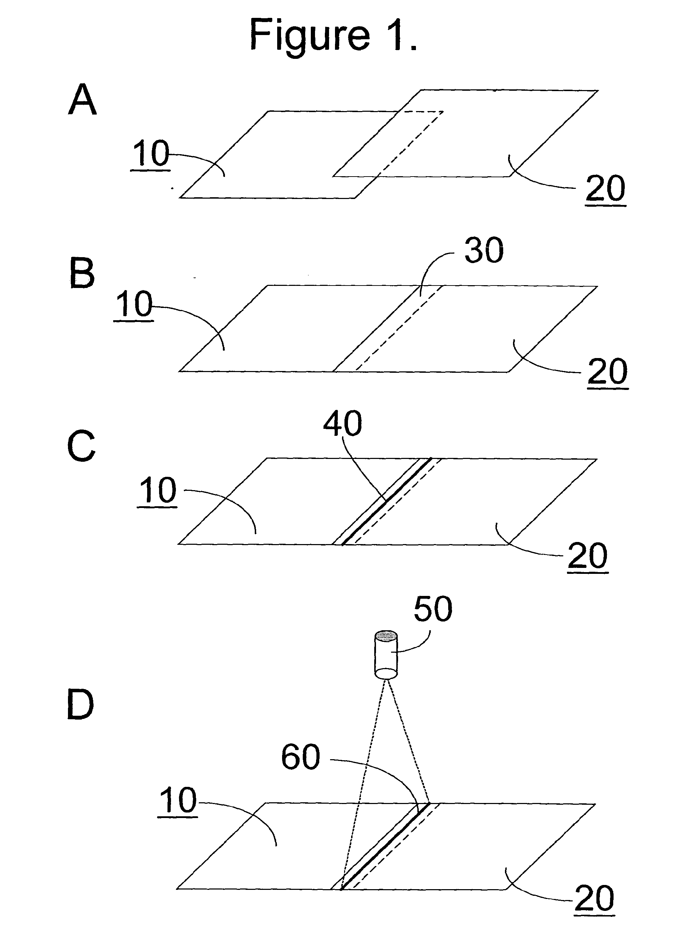

Fig. 1 is a representation of the process steps to make a welded seam in two fabric pieces according to one embodiment of the invention.

### DETAILED DESCRIPTION OF THE PREFERRED EMBODIMENTS

The present invention provides a welding process for joining at least two fabric pieces, such as ends, using power emitted from a radiation source, such as a laser. Suitable fabrics are typically synthetic polymer fibers such as: nylon, polyester, polyurethanes, polyolefins and combinations thereof. Nylon polymer based synthetic fibers have been found to be preferred in the construction of fabrics amenable to the welding process of the invention when the radiation source is a laser. In particular, nylon-66 polymer based high performance synthetic fibers are preferred in such applications. Such high performance synthetic fibers include the type used in the production of fabrics used to construct airbags, safety cushions and curtains for automobiles and other transportation means. However, other synthetic fibers are suitable for other applications. Other synthetic polymer fibers, e.g. nylon, polyester, polyurethanes, polyolefins and combinations of these materials, are used in the production of vehicle seatbelts, apparel, footwear, furnishings, signage and geogrids.

The method of the invention will be described with reference to Figure 1 and steps represented as A through D. Figure 1 is a non-limiting representation of the process steps, demonstrating the joining of two fabric pieces. However, the demonstration of the joining of two fabric pieces is not intended to limit the invention to a seam made from two fabric pieces, but rather is included for purposes of demonstration only. Many layers of fabric pieces may be joined according to the invention, so long as the mechanical strength and gas permeability of the seam is acceptable for the application of the joined fabric pieces.

First at Step A, two fabric pieces 10 and 20 are selected for joining at their ends by creating a seam. At Step B, the ends of the two fabric pieces 10 and 20 are arranged to overlap in a region of attachment 30. Next at Step C, a radiation absorbing ink is applied in a region to form a dye applied region 40 in the pattern to be welded. The amount of radiation absorbing dye that is applied should not exceed the amount necessary to allow a suitable depth of weld in the seam from being achieved. Preferably, the amount of dye that is applied is less than or equal to about 50 grams of dye per square meter of surface that is exposed to the radiation source. More preferably, substantially less than or equal to about 50 grams of dye should be applied per square meter of surface that is exposed to the radiation source. The radiation absorbing dye may be applied to any surface of the fabric pieces, including both inner and outer surfaces. Preferably, the radiation absorbing dye is applied to the fabric pieces substantially in the area that will be exposed to the radiation. The radiation absorbing ink may be applied in any suitable manner, *e.g*., it can be painted, sprayed or jetted. Also, mixtures of inks may be used.

This radiation absorbing ink may be any energy absorbing ink, which will upon exposure to a radiation source facilitate the formation of at least one radiation welded point of attachment between the fabric pieces and preferably a substantially continuous radiation welded seam attaching the fabric pieces to each other. Preferred ink (or dye) should have the following properties. Preferably, the dye should exhibit little or no absorption in the visible range (about 400 nm to about 700 nm); it should have substantial to strong absorption near the wavelength emitted by the radiation source; it should not degrade to colored byproducts after radiation exposure; it should have affinity for the substrate; and it should be stable to the melting point of the substrate (*i*.*e*., synthetic fiber).

For example, if the radiation to be used to form the seam is infrared, the radiation absorbing ink may be selected from the group of at least one of cyanine dyes, squarylium dyes and croconium dyes. These dyes are known to absorb infrared energy in a peak range of from about 785 to about 820 nanometers (nm) and to have a low absorption in the visible range of from about 400 to about 700 nm. These dyes absorb light in other bands as well. In addition, these dyes have been found to have good affinity for the substrate, e.g. nylon-66, are stable at least up to the melting point of the synthetic polymer yarn substrate and do not degrade to colored by-products after infrared (laser) light exposure.

In Step D, a radiation beam 60 emitted from a radiation source 50 is scanned over the dye applied region 40, which may include at least a portion of the lapped fabric region 30 to be joined. Any radiation source may be used, which will cause the formation of at least one radiation welded point of attachment between at least two fabric pieces or a substantially continuous radiation welded seam attaching the two fabric pieces to each other.

Where infrared absorbing inks are selected, lasers are a preferred radiation source. Suitable lasers are of the Nd:YAG solid state type with a light emission wavelength of about 1064 nm, or the higher power diode type with emission wavelengths of about 808 nm or about 940 nm. An example of such a laser is one obtained from ROFIN-BAASEL (330 Codman Hill Road,
Boxborough, Massachusetts, USA 01719). This laser is one kilowatt ROFIN-BASSEL diode laser operating in continuous mode at a wavelength of 940 nanometers; its beam width may be 10 millimeters. The laser beam is scanned at a rate of one to twenty-five meters per minute exposing the ink applied region of lapped fabric pieces to a laser power in the range of 200 to 1000 Watts. Applying pressure to the lapped fabric pieces while the fabric pieces are scanned by the laser is thought to be beneficial mechanical strength, which is further believed to benefit gas permeability of the seam. Other types of radiation sources, such as ultraviolet or microwave, may be used to weld the fabric pieces where the radiation absorbing ink absorbs radiation in those wavelengths. Those skilled in the art will be able to select a suitable radiation source and operating conditions of the radiation source, based on the selection of the radiation absorbing dye and the final desired properties of the seam of the final product.

A useful variant of the process includes the steps of lapping the two fabric pieces to be attached, as in Step B, with an interleaving of a polymeric film between the fabric pieces to be joined, sandwich style. The polymeric film is preferably interleaved prior to the application of the ink, and must be interleaved prior to formation of the seam. The radiation absorbing dye may be applied to any surface of the fabric pieces or the polymeric film, including both inner and outer surfaces. Preferably, the radiation absorbing dye is applied to the fabric pieces substantially in the area that will be exposed to the radiation. Although not intending to be bound by any theory of operation, it is believed that the radiation absorption by the radiation absorbing ink becomes thermal energy, which melts the fibers of the fabric pieces and causes a bonding or welding of the seam. The radiation absorbing ink may be applied in any suitable manner, e.g., it can be painted, sprayed or jetted. Also, mixtures of inks may be used All the other details of the method are the same as described above.

In the case of nylon fabrics, the polymeric film is preferably a polyamide or copolyamide film. DARTEK®, a nylon 66 film from DuPont Canada
(Mississauga, Ontario, Canada) of 50 microns thickness is thought to be a particularly advantageous material for making welded seams which are gas-tight. Other suitable films include those made from urethane polymers, polyetheramides and copolyetheresters.

The methods of the present invention provide a welded seam fabric construction which is substantially gas-tight and of high mechanical performance. The strength of the welded seams is at least useful for fabric constructions where the steps of seam sewing are to be avoided. Joined fabrics made according to the invention comprise at least two overlapping fabric pieces (such as ends) and a seam comprising at least one radiation welded point of attachment between at least two of the overlapping fabric pieces, the seam formed by dispersing a radiation absorbing ink generally in the area of the overlapping fabric pieces and exposing the dispersed radiation absorbing ink and fabric pieces to radiation of at least some of the wavelengths absorbed by the radiation absorbing ink. The joined fabric may optionally comprise a polymeric film interleaved between at least two of the fabric pieces. Polyamide films, and specifically nylon-66, are the preferred interleaved film for nylon, and specifically nylon-66, fabric pieces. In the case of seams including interleaved polymeric films between at least some of the fabric pieces, the radiation absorbing ink may be applied on a surface of the fabric pieces to be joined, or may be applied either in addition to having been applied on the surface of the fabric pieces, or alternatively to the polymeric film interleaving the fabric pieces. Preferably, at least some radiation absorbing ink is applied generally in an area that is exposed to radiation. The radiation absorbing ink may be applied on any suitable surface, such as between fabric pieces or on one or both sides of the fabric pieces. In the case of fabric constructions, e.g., air bags, gas inflatable safety cushion or curtains, an acceptable welded seam is attainable and a substantially gas-tight seam, at least equivalent to a sewn seam is readily provided. Other fabric constructions where joined fabric pieces made according to the invention are desirable include apparel and upholstery fabrics and products.

The invention will be described in greater detail with reference to the following examples which are intended to illustrate the invention without restricting the scope thereof.

### TEST METHODS

The test method for determination of the fabric end seam gas tightness consists of connecting an air supply to the sample piece. The sample piece is then submerged in water for safety reasons and as an aid to observing leakage from the sample piece. The air supply to the sample is controlled using a supply valve in combination with a flowrate monitor and a pressure gauge. To start a test of a sample the supply valve is partially opened and when the sample is judged to be fully inflated the pressure and the flowrate are recorded. The flowrate required to maintain the pressure is judged to be the leakage rate of the sample at the pressure measured. A completely leak free sample would require zero flowrate to maintain the pressure. The pressure is gradually increased and each time the flow and pressure are recorded. The end of the test is determined by the technician supervising the trial and usually occurs when an increase in flowrate no longer produces a significant pressure increase.

The test method for determination of the fabric end seam strength is conducted according to BS EN ISO 13935-Part 1:1999 Textiles - Seam tensile properties of fabrics and made-up textile articles; Part 1: Determination of maximum force to seam rupture using the strip method. The seam strength is reported in units of force, Newtons (N).

### EXAMPLES

### Comparative Example

Part 1. In this part of the comparative example, a fabric woven from a 315 denier (equivalent to 350 dtex) Type 749 nylon-66 yarn obtained from INVISTA INCORPORATED , Wilmington, Delaware, USA 19805 was woven with 23.5 warp ends per centimeter and 23.5 weft insertions per centimeter. Two portions of this fabric were joined in a conventional sewn seam of 5 centimeters length using sewing thread of a conventional type for airbag construction. This sewn seam was measured for seam integrity by the test method.

Part 2. In this part of the comparative example, the same woven fabric of Part 1 was used to construct a cushion form with continuous sewn seams and a tubulation portion through which inflation gas could be introduced. This cushion was measured for seam leakage by the test method.

### Invention Example

Part 1. In this example of the invention, the same fabric woven used in the comparative example was used to construct a cushion form with continuous seams using the laser welding process, also included was a tubulation portion through which inflation gas could be introduced. The laser used to weld the seams was a ROFIN-BAASEL one kilowatt diode laser (obtained from ROFIN-BASSEL, 330 Codman Hill Road, Boxborough, Massachusetts, USA 01719) operating in continuous mode at a wavelength of 940 nanometers; the beam width was 10 millimeters. A cyanine dye with a near infrared absorption maximum of about 785 nanometers (nm) was applied in a line over a lapped portion of the two fabric ends. No more than 50 grams of dye per square meter of fabric exposed to the laser was applied. The laser was scanned at 2 to 10 meters per minute and power in the range of 200 to 1000 Watts. This laser welded seam was measured for gas tightness and seam integrity by the test methods.

In comparison, the seam strength of the invention example had a mean value of 430 N, while the comparative sewn seam example had a mean seam strength value of 1108 N. The gas leakage rates of the comparison sewn seam cushion and the laser welded seam cushion were the same according to the test method at a leak rate of 3 liters per second with an internal pressure of 80 kiloPascal.

Part 2. In this part of the invention example, the same woven fabric of the comparative example is used to prepare a lapped seam comprising two ends of fabric. Interleaved within the lap of the fabric ends is a copolyamide film (DARTEK® a nylon-66 film from DuPont Canada, Mississauga, Ontario, Canada) of 50 microns thickness. This fabric lap and film sandwich is then painted with the same dye used in Part 1 and seam welded in an identical manner as in Part 1. The welded seam formed in this manner is shown to have a mean strength of 692 N.

## Claims

1. A joined fabric comprising;
at least two overlapping fabric pieces; and
a seam, the seam comprising at least one radiation welded point of attachment between at least two of the overlapping fabric pieces,
wherein the seam is formed by dispersing a radiation absorbing ink generally in the area of the overlapping fabric pieces and exposing the dispersed radiation absorbing ink and fabric pieces to radiation of at least some of the wavelengths absorbed by the radiation absorbing ink.

2. The fabric of claim 1, wherein the fabric pieces comprise synthetic polymer fibers.

3. The fabric of claim 2, wherein the synthetic polymer fibers comprise nylon, polyester, polyurethane, polyolefin or combinations thereof.

4. The fabric of claim 3, wherein the fabric comprises nylon-66.

5. The fabric of claim 4, wherein the radiation absorbing ink comprises an infrared absorbing ink.

6. The fabric of claim 5, wherein the infrared absorbing ink comprises cyanine dyes, squarylium dyes, croconium dyes and combinations thereof.

7. A fabric construction comprising the fabric of claim 6.

8. The fabric construction of claim 7, wherein the fabric construction comprises apparel, upholstery fabric, or a gas inflatable safety cushion or curtain.

9. The fabric construction of claim 8, wherein the fabric construction comprises an automotive gas inflatable safety cushion or curtain.

10. The fabric construction of claim 9, wherein the seam strength has a mean value of about 430 N.

11. The fabric construction of claim 10, wherein the gas leakage rate is about 3 liters of air per second at a fabric construction inflation internal pressure of about 80kP.

12. The fabric construction of claim 11, further comprising a polyamide film interleaved between at least two of the overlapping fabric pieces.

13. The fabric construction of claim 12, wherein the polyamide film comprises nylon-66.

14. The fabric construction of claim 12, wherein the seam strength has a mean value of about 690 N.

15. A fabric construction comprising the fabric of claim 1.

16. The fabric construction of claim 15, further comprising a polymeric film interleaved between at least two of the overlapping fabric pieces.

17. The fabric construction of claim 16, wherein the fabric construction comprises apparel, upholstery or a gas inflatable safety cushion or curtain, or an air bag.

18. A method for forming a radiation welded point of attachment between at least two overlapping fabric pieces comprising:
lapping the overlapping fabric pieces to be attached;
optionally applying pressure to the lapped fabric pieces;
applying a radiation absorbing ink to the lapped fabric pieces in a region where the fabric pieces are to be attached; and
exposing the ink applied region of the lapped fabric pieces to a source of radiation capable of emitting radiation of at least some of the wavelength absorbed by the radiation absorbing ink.

19. The method of claim 18, wherein the fabrics of the fabric pieces comprise nylon, polyester, polyurethane, polyolefin or combinations thereof.

20. The method of claim 19, wherein the fabrics comprise nylon-66.

21. The method of claim 20, wherein the radiation absorbing ink comprises an infrared absorbing ink.

22. The method of claim 21, wherein the infrared absorbing ink comprises cyanine dyes, squarylium dyes, croconium dyes and combinations thereof.

23. The method of claim 22, wherein the radiation source comprises a laser.

24. The method of claim 23, wherein the power of the laser is applied in the power range of about 200 to about 1000 Watts.

25. The method of claim 24, further comprising scanning the laser along the ink applied region at a rate of about one to about twenty-five meters per minute.

26. The method of claim 25, further comprising interleaving a polyamide film between the lapped fabric pieces prior to applying the radiation absorbing ink.

27. The method of claim 26, wherein the polyamide film comprises nylon-66.

28. A method of producing a substantially gas impermeable, mechanically strong seam of two or more fabrics comprising:
lapping fabric pieces to be attached;
interleaving a polymeric film between at least some of the lapped fabric pieces;
optionally applying pressure to the lapped fabric pieces and the interleaved polymeric film;
applying a radiation energy absorbing ink to at least one of the lapped fabric pieces and the polymeric film in a region where the fabric pieces are to be attached; and
exposing the ink applied region of lapped fabric pieces to a source of radiation capable of emitting radiation having at least some of the wavelength absorbed by the radiation absorbing ink.
